# EUROPÄISCHE PATENTSCHRIFT

(11) **EP 1 012 486 B1**
(45) Veröffentlichungstag und Bekanntmachung des Hinweises auf die Patenterteilung: **23.12.2009**
(21) Anmeldenummer: 98942575.6
(22) Anmeldetag: 20.07.1998
(51) Int. Cl.: F16C 9/04, F16C 33/14, C23C 4/02, C23C 4/12

(54) **PLEUEL MIT EINER FESTSITZENDEN GLEITLAGERSCHICHT**
CONNECTING ROD WITH A TIGHT FRICTION-BEARING LAYER
BIELLE A COUCHE INAMOVIBLE FORMANT UN COUSSINET LISSE

(30) Priorität: 28.07.1997 DE 19732401; 01.08.1997 DE 19733197; 06.08.1997 DE 19733930
(43) Veröffentlichungstag der Anmeldung: 28.06.2000
(73) Patentinhaber: Volkswagen Aktiengesellschaft, 38436 Wolfsburg (DE)
(72) Erfinder: SCHLEGEL, Udo, D-38159 Vechelde (DE); VOGELSANG, Reinhard, 38226 Salzgitter (DE)
(74) Vertreter: Pohlmann, Bernd Michael
(86) Internationale Anmeldenummer: PCT/EP1998/004496
(87) Internationale Veröffentlichungsnummer: WO 1999/006722

(56) Entgegenhaltungen:
- WO-A1-96/04485
- DE-A- 4 303 592
- GB-A- 1 531 222
- US-A- 5 458 984

## Beschreibung

Die Erfindung betrifft ein Verfahren zum Herstellen eines Pleuels gemäß dem Oberbegriff des Anspruchs 1.

Die heute zum Einsatz kommenden Pleuel, insbesondere für Brennkraftmaschinen, werden als sogenannte geschnittene Pleuel oder als Crackpleuel ausgeführt. Geschnitten oder gecrackt wird hierbei das große Pleuelauge, das die Kurbelwelle umgreift. Das kleine Pleuelauge braucht in der Regel nicht geöffnet zu werden, da es über einen geraden Bolzen mit dem Kolben verbunden wird.

Je nach Lagerbelastung, werden die Pleuelaugen mit unterschiedlichen Lagerschalen (Gleitlager) ausgestattet. Als Lagerschalen kommen insbesondere Stützschalenwerkstoffe zum Einsatz, die in der Regel aus Stahl C 10 nach DIN 17210 bzw. SAE 1010 gebildet sind. Die Lagerschalen können je nach Bauform und Verwendung kalt verfestigt sein. Auf diesen Stützschalenwerkstoff kann die eigentliche Gleitlagerlaufschicht, beispielsweise Weißmetall, Bleibronze, Leichtmetall, Spatterschichten o. ä., in Abhängigkeit der zu erwartenden Lagerbelastung aufgebracht werden. Die Ausführung der Lagerschalen kann als Dreistoff-, Zweistoff- oder Massivlagerschale oder anderes erfolgen. Damit die Lagerschalen nach der Montage einen einwandfreien Festsitz erreichen, werden die Lagerschalen mit einer Vorspannung montiert.

Die Lagerschalen stellen nicht nur einen materiellen Kostenfaktor dar, sie beinhalten auch einen Produktionsaufwand und stellen eine Fehlerquelle dar. So kann beispielsweise bei der Montage der Einsatz einer Lagerschale oder Lagerschalenhälfte vergessen werden, wodurch es zu erheblichen Motorschäden kommt.

Aus der WO 9604485A ist ein Verfahren zum Herstellen eines Pleuels mit einem Pleuelauge, in dem eine Lagerschicht angeordnet ist, die durch thermisches Spritzen eines Lagerwerkstoffes auf das Pleuelauge aufgebracht wird, bekannt. Die Lagerschicht besteht aus einer mehrlagigen Beschichtung, wobei die einzelnen Schichten thermisch gespritzt werden. Ferner ist aus der US 5458984 eine Lagerschicht bestehend aus mehreren Schichten bekannt, die durch Metallsprühen auf einen Lagerkörper aufgebracht werden. Um eine gute Adhäsion der Schichten zu erreichen, wird dabei vorgeschlagen, die Schichten mit einer abnehmenden Porosität und einer zunehmenden Dichtigkeit in Richtung der Lageroberfläche auszubilden.

Aufgabe der vorliegenden Erfindung ist es, ein Pleuellager mit hoher Festigkeit einer Gleitschicht zu fertigen.

Diese Aufgabe wird gelöst mit den Maßnahmen des Anspruchs 1.

Die Unteransprüche zeigen bevorzugte Ausführungsformen.

Erfindungsgemäß wird in ein Pleuelauge, hierbei handelt es sich insbesondere um das große Pleuelauge, ggf. auch beide Pleuelaugen, nicht mehr eine Lagerschale eingesetzt, sondern die Lagerschicht wird direkt durch thermisches Spritzen auf dem Pleuelauge aufgebracht. Als thermisches Spritzen kommt insbesondere Plasmaspritzen zum Einsatz. Die Pleuel sind insbesondere Teile einer Verbrennungskraftmaschine. Zur Steigerung der Haftzugfestigkeit der Lagerschicht kann das zu beschichtende Material des Pleuelauges aufgerauht werden, wobei vorteilhaft mit unterschiedlichen Sieblinien gestrahlt wird. Zur Erhöhung der Restölmenge auf der Lagerschicht kann diese eine Nut aufweisen und/oder ist microporös.

Erfindungsgemäß wird der Lagerwerkstoff im Verlaufe des thermischen Spritzens, insbesonders Plasmaspritzens, mit unterschiedlichen Temperaturen auf dem Substrat abgeschieden. Die unterschiedlichen Temperaturen werden mit den im Kennzeichen des Anspruchs 1 definierten Parameteränderungen erreicht, wobei ein oder mehrere, ggf. weitere unterschiedliche Parameter geändert werden können. Die zu ändernden Parameter sind insbesondere für eine Temperaturerhöhung, Erhöhung des Stroms- bzw. der Spannung am Brenner, Verringerung der Zufuhr des Kühlgases bzw. Trägergases, Erhöhung der Brenngaszufuhr (beispielsweise Wasserstoff), ggf. Verringerung des Massestroms des zuzuführenden Lagerwerkstoffes, Verringerung der Partikelgröße des Lagerwerkstoffes bzw. Veränderung der Zusammensetzung des Lagerwerkstoffes. Zur Verringerung der Abscheidetemperatur kann bei einem oder mehreren der Parameter gegensätzlich verfahren werden.

Besonders vorteilhaft wird die Aufbringtemperatur des Lagerwerkstoffes im Verlaufe des thermischen Spritzens abgesenkt. Grundsätzlich kann zu einem späteren Zeitpunkt die Aufbringtemperatur wieder angehoben werden, vorteilhaft bleibt sie jedoch abgesenkt. Besonders vorteilhaft wird, wenn die Oberfläche der thermisch gespritzten Lagerschicht abgetragen wird, der abzutragende Teil der Lagerschicht bei einer niedrigen Temperatur gespritzt, wobei der Abtrag gewünschtenfalls bis in einen Lagerschichtbereich erfolgt, der bei einer höheren Temperatur gespritzt wurde. Bei diesem Verfahren kann besonders vorteilhaft die Temperatur soweit abgesenkt werden, daß der abzutragende Bereich der Lagerschicht einen verhältnismäßig minderwertigen Schichtanteil enthält, der nach dem Nacharbeiten der Lagerschicht entfernt ist.

Bei dem erfindungsgemäßen Verfahren kann die Anfangstemperatur, mit der der Lagerwerkstoff auf dem Pleuelsubstrat aufgebracht wird, derart erhöht werden, daß mit einer Aufbringtemperatur gearbeitet wird, die so hoch ist, daß sie zu einem Ausglühen des Pleuelwerkstoffes führen würde, wenn die gesamte notwendige Lagerschicht mit dieser Temperatur aufgebracht würde. Hierdurch erreicht man eine besonders hohe Haftfestigkeit der Lagerschicht auf dem Substrat des Pleuelauges und, gewünschtenfalls, eine niedrigere Porosität in der Lagerschicht.

Bei der thermischen Beschichtung eines Pleuelauges wurde festgestellt, daß die verwendbaren Lagerschichten, beispielsweise aus Aluminiumbronze, eine hohe Schichteigenspannung haben, die insbesondere dadurch erhöht ist, daß das Material mit einer nur niedrigen Porosität aufgebracht wird. Hierbei zeigt es sich, daß Maßnahmen zur Erhöhung der Haftfestigkeit der Lagerschicht notwendig sind. Dies wird erfindungsgemäß neben einer hohen Anfangsauftragetemperatur vorteilhaft dadurch erreicht, daß das Pleuelauge mit mindestens einer feinen und mindestens einer gröberen Sieblinie sandgestrahlt (partikelgestrahlt) wird.

Die vorteilhaft zum Einsatz kommenden unterschiedlichen Sieblinien werden auch als mesh-Klassen bezeichnet, wobei insbesondere die Klassen von 16 mesh bis 230 mesh (16, 18, 20, 25, 30, 35, 40, 45, 50, 60, 70, 80, 100, 120, 140, 170, 200 und 230) zum Einsatz kommen. Die mesh-Zahl gibt an die Zahl der Löcher pro Quadratinch (pro 6,45 cm²) in dem verwendeten Sieb. Die einzelnen Sieblinien, inklusive Toleranzen und Siebdrahtstärken können beispielsweise dem Handbook of Chemistry and Physics, 64th edition, 1983/84, CRC Press Inc. Florida, S.F-114, entnommen werden.

Die betriebssichere Gestaltung von Pleuellagern verlangt eine verschleißsichere Auslegung und Konstruktion der Lager, um die Lagerkräfte sicher und bei noch zulässigen Temperaturen zu übertragen. Verschleißsicherheit ist immer dann gegeben, wenn die Gleitflächen durch einen tragfähigen Schmierfilm (Ölfilm) voneinander getrennt sind. Ein solcher Schmierfilm ergibt sich bei Gleitlagern durch eine schwach-exzentrische Wellenlagerung. Die rotierende Welle hat hierdurch eine Pumpwirkung, die den Schmierstoff (Motoröl) in den (exzentrischen) Lagerspalt fördert, wobei an den konvergenten Lagerspalten der Öldruck aufgebaut wird. Das heißt, das Schmiermittel wird in den engsten Querschnitt gepreßt. Hierbei entsteht ein Zustand der "Grenzschmierung" (Grenzflächenreibung - Lagermaterial auf Wellenzapfen), wenn die Drehbewegung der Welle beginnt bzw. sehr langsam ist. Eine Zunahme der Drehbewegung bewirkt, daß sich der Ölfilm am Tragen des Wellenzapfens beteiligt, obwohl noch kein zusammenhängender Ölfilm aufgebaut ist. Dies ist ein Zustand der "Mischreibung", d.h. gleichzeitige Grenzflächen- und Schwimmreibung. Dieser Zustand liegt überwiegend beim Anlassen und Abstellen eines Motors vor. Eine weitere Zunahme der Rotationsgeschwindigkeit bewirkt dann die Ausbildung der hydrodynamisch tragenden Schmierfilmschicht mit der Dicke eines halben Lagerspiels. Dieser Zustand ist die "Schwimmreibung". Das Lagerspiel beträgt hierbei üblicherweise 15 bis 60 µm.

Durch die Plasmabeschichtung des (großen) Pleuelauges mit einem entsprechenden Lagermaterial, insbesondere in Verbindung mit Mikroporen und/oder einer Nut innerhalb der Gleitlagerschicht, wird ein hohes Ölrückhaltevolumen innerhalb des Pleuellagers erreicht, wodurch die Reibung und damit der Verschleiß der gegeneinander bewegten Teile, insbesondere bei der Grenzschmierung und der Mischreibung, vermindert sind. Deutlich verbessert wird das Ölrückhaltevolumen durch das Einbringen mindestens einer Nut in das Pleuellager, wobei diese Nut (bzw. Nuten) besonders vorteilhaft als Radialnuten ausgebildet sind. Zur weiteren Erhöhung des Ölrückhaltevermögens beläßt man diese Nuten (zumindest weitgehend) unbearbeitet, d.h. mit der herstellungsbedingten rauhen Oberflächenstruktur.

Die poröse, aber druckstabile Oberflächenstruktur der Gleitlagerfläche, die vorteilhaft spanabhebend bearbeitet ist, und die unbearbeitete Nut mit sehr rauher Oberflächenstruktur bewirken in jedem Lagerzustand, unabhängig von Drehbewegung und Öldruck, daß ein gewisser Ölanteil im Lager gespeichert ist. Hierdurch wird es ermöglicht, den Zustand der Grenzflächen- und Mischreibung schon bei einer geringen Kurbelwellendrehzahl zu durchfahren und damit schneller den Zustand der (nahezu) verschteißfreien hydrodynamischen Schmierung zu erreichen. Das heißt, die Notlaufeigenschaften beim Motoranfahr- und -auslaufzustand werden wesentlich verbessert, wodurch höhere Lagerbelastungen bei gleichen Lagerdimensionen möglich sind.

Die Erfindung hat folgende Vorteile: Es können die sonst bei Pleueln üblichen Lagerschalen, die die Gleitlagerfläche bilden, entfallen, da erfindungsgemäß die Lagerbeschichtung auf den Pleuelwerkstoff (und nicht auf ein extra einzusetzendes Element) aufgebracht werden kann. Hierdurch entfällt auch gleichzeitig die Montage der Lagerschalen. Durch den Wegfall der Lagerschalen und/oder durch eine spanabhebende Nachbearbeitung der erfindungsgemäßen Gleitlagerschicht erreicht man eine Reduzierung der Toleranzen. Bei den üblichen Pleuellagern hat man drei Toleranzen, die erste Toleranz ist die der Kurbelwelle, die zweite Toleranz wird von der Gleitschicht (der Lagerschalen) im Pleuel und die dritte Toleranz vom Pleuelauge, in das die Lagerschale eingesetzt wird, bestimmt. Durch die erfindungsgemäße Beschichtung und Nachbearbeitung der Lagerschicht entfällt die dritte Toleranz. Weiterhin hat man erfindungsgemäß eine größere Materialstärke im Schraubenbereich, da die erfindungsgemäß aufgetragene Lagerschicht eine geringere Stärke hat als eine Lagerschale; hierdurch werden auch höhere Belastungen bei gleichen äußeren Pleuelabmessungen möglich. Die dritte Toleranz (die Toleranz des Pleuelauges) kann bei der vorliegenden Erfindung sehr grob bemessen werden, da sie durch die nachfolgende Beschichtung, die auf das zweite Toleranzmaß, beispielsweise durch Feinspindeln, abgetragen wird, ausgeglichen wird.

Die Lagerschicht wird vorteilhaft derart aufgespritzt, daß sie, ggf nach einem Schichtabtrag, zumindest in der Oberfläche eine gewisse Porosität hat. Diese Porosität wird dadurch erreicht, daß die Lagerschicht mit Mikroporen hergestellt wird, die auch durch Oxideinschlüsse gebildet werden, die bei der Nachbearbeitung der Schichtoberfläche unter Bildung freier Mikroporen ausgeräumt werden. Der Porositätsanteil liegt im Laufflächenbereich vorteilhaft bei 0,2 bis 6 % und insbesondere beträgt er 0,5 bis 4 %. Vorteilhaft sind die Mikroporen außerdem nicht miteinander verbunden, so daß das Porenvolumen der Mikroporen überwiegend von geschlossenen Poren gebildet ist. Diese Mikroporen bilden ein hydrodynamischen Mikrodruckkammer-Schmiersystem, wobei die Mikroporen beispielsweise durch den spanabhebenden Vorgang der Oberflächenbearbeitung (beispielsweise Feinspindeln) offengelegt werden. Die Poren innerhalb der Gleitlagerfläche dienen hierbei als Ölrückhattekammern, so daß im Moment des Motorstartes bzw. Motorauslaufes und der beginnenden bzw. nachlassenden Rotation der Kurbelwelle, vermutlich durch Adhäsion des Motorenöles aus den Mikroporen mit der Kurbelwelle, noch ein ausreichendes Ölvolumen zur Gleitfilmbildung (Schwimmreibung) zur Verfügung steht, obwohl der Öldruck im Gleitlager bereits abgefallen ist bzw. erst aufgebaut werden muß. Durch das Mikrodruckkammersystem kann der Bereich der Mischreibung wesentlich verkürzt werden. Hierdurch werden auch die Notlaufeigenschaften des Lagers, ohne Einbringung von zusätzlichen Gleitlagerstoffen wie Blei-, Zinn- oder Nickellegierungen o.ä. wesentlich erhöht. Vorteilhaft wird die Größe der Poren und das Porenvolumen je nach Lagerbelastung der Gleitoberfläche beim thermischen Spritzen eingestellt. Üblicherweise befindet sich der überwiegende Teil des Porenvolumens in Poren der Größe 0,2 bis 250 µm, insbesondere 1 bis 50 µm.

Der übliche Ablauf bei der Herstellung der Lagerschicht ist wie folgt: Zuerst wird die zu beschichtende Substratoberfläche (beispielsweise das große Pleuelauge) gereinigt, insbesondere von Fett befreit. Dies erfolgt beispielsweise mittels Heißdampf. Anschließend wird die Substratoberfläche sandgestrahlt, beispielsweise mit Al₂O₃, auch SiO₂ bzw. SiC sind einsetzbar. Der Strahldruck liegt vorteilhaft bei 3 bis 8 bar und insbesondere bei 4 bis 6 bar, wobei mit unterschiedlichen Körnungen gearbeitet wird. Vorteilhaft wird hierbei eine ansteigende Körnung (gröber werdende Sieblinien) eingesetzt, d.h. zunächst wird mit einem feineren Korn und dann mit einem gröberen Korn sandgestrahlt. Ganz besonders vorteilhaft werden mindestens drei unterschiedliche Körnungen (gröber werdende Sieblinien) eingesetzt. Die Körnungen liegen hierbei im üblichen mesh-Bereich, wobei für die feine Körnung vorteilhaft mesh 80 und kleiner, insbesondere mesh 100 bis mesh 230 eingesetzt wird. Für die mittlere Körnung wird vorteilhaft eine Korngröße mit mesh 100 oder größer, insbesondere bis mesh 40 und besonders vorteilhaft mesh 80 bis mesh 45 eingesetzt. Für die grobe Körnung kommt vorteilhaft ein Korn mit mesh 45 oder größer und insbesondere mesh 30 oder größer zum Einsatz, vorteilhaft bis mesh 16 (600 µm bis 1,18 mm Standardsiebgröße).

Mit den unterschiedlichen Körnungen beim Sandstrahlen erreicht man auch im Bereich einer Kerbe, beispielsweise einer Bruchkerbe oder einer Nut, eine gute Oberflächenrauhigkeit. wobei im glatten Bereich eine Oberflächenstruktur mit einer Mittenrauhtiefe RA von ca. 5 bis 10 µm und insbesondere 6,5 bis 8 µm erzielt wird, bei RZ ca. 35 bis 60 µm und insbesondere 42 bis 54 µm. Mit solchen Sandstrahlrauhigkeiten wird eine besonders gute Haftzugfestigkeit der thermisch gespritzten Schicht auf dem Pleuel erreicht.

Anschließend erfolgt eine Plasmabeschichtung, beispielsweise mit einer AlCuFe-Legierung (Aluminiumbronze). Vorzugsweise wird die thermisch gespritzte Lagerschicht mit einer steigenden Porosität hergestellt (alternativ oder zusätzlich können auch andere temperatursenkende Maßnahmen während des thermischen Spritzens zum Einsatz kommen), wobei als erstes eine Schicht mit einer geringen Porosität (≤2%, insbesondere ≤ 1 %) hergestellt wird. Hierfür eignet sich beispielsweise eine Pulverkorngröße um 38 µm (400 mesh). Diese untere Beschichtung wird in einer Schichtdicke von ca. 100 bis 300 µm, insbesondere 200 bis 250 µm, hergestellt. Hierauf wird dann eine Schicht mit einer Porosität von ca. 2 bis 6 %, insbesondere 2,5 bis 4 % erzeugt, wobei beispielsweise ein Pulverkorn der Größe um ca. 63 µm (mesh 230) eingesetzt wird. Die Pulverkorngröße ist hierbei so gewählt, daß mindestens 40 Gew.-%, insbesondere mindestens 50 Gew.-% des Pulvers kleiner oder gleich der Standardsiebgröße ist, vorteilhaft liegen mindestens 70 Gew.-% und insbesondere mindestens 80 Gew.-% innerhalb der nächsten Klasse und weiterhin liegen vorzugsweise mindestens 90 Gew.-% innerhalb des doppelten Durchmessers (halbe mesh-Größe).

Die Schichtdicke wird hierbei ebenfalls in dem für die untere Beschichtung angegebenen Bereich gewählt. Wenn nur eine Schicht gebildet wird, ist diese vorteilhaft 100 bis 600 µm, insbesondere 200 bis 400 µm dick.

Es hat sich gezeigt, daß mit abnehmender Porosität die Schichteigenspannung steigt, wodurch die Gefahr des Ablösens der Schicht vom Pleuelauge besteht. Dem wird insbesondere mit den speziellen Sandstrahlschritten begegnet, mit denen eine besonders hohe Haftfestigkeit der Schicht auf dem Pleuelauge erreicht wird. Zum anderen wird erfindungsgemäß ein Ablösen der Schicht durch zu hohe Schichteigenspannung dadurch verhindert, daß die Aufbringtemperatur der Schicht erhöht wird. Dies geschieht beispielsweise durch Erhöhung der Spannung bzw. des Stroms an einem Plasmabrenner. Hierdurch wird die Schicht besser auf dem Substrat (Pleuelauge) verteilt und eine bessere Haftung erreicht. Dies geschieht vorteilhaft nur in dem Maße, daß die aufgebrachte Schicht noch eine gewisse geringe Porosität hat, wie sie oben beschrieben ist. Andererseits bringt die Erhöhung der Aufbringtemperatur auch die Gefahr des Ausglühens des Substrats mit sich, das heißt das Substrat kann überhitzt werden. Dies ist insbesondere bei Eisenwerkstoffen problematisch. Dem wird erfindungsgemäß wiederum dadurch begegnet, daß nur eine untere Schicht mit der hohen Aufbringtemperatur abgeschieden wird. Der weitere Schichtaufbau erfolgt dann kälter und insbesondere mit einer höheren Porosität. Wenn diese höhere Porosität für das gewünschte Gleitlager ungeeignet ist, ist dies unproblematisch, wenn diese höher poröse Schicht bei der anschließenden Bearbeitung abgetragen wird. In diesem Fall dient die höher poröse Schicht bzw. die kälter aufgetragene Schicht nur der Substratgewinnung für eine mechanische Nachbearbeitung.

Der Auftrag der Lagerschichten erfolgt vorzugsweise in einem Arbeitsgang, d.h. der Beschichtungsablauf wird nicht unterbrochen. Hierzu erfolgt vorteilhaft eine automatische Pulver- und/oder Parameteranpassung, um die unterschiedlichen Porositäten zu erreichen.

Die untere Lagerschicht deckt vorteilhaft die Unrundheit, die beispielsweise durch das Cracken des Pleuels beim Aufbrechen der Lagerschale entsteht (typische Unrundheit 30 bis 150 µm) ab, und kann zur Erreichung einer für eine spätere Nachbearbeitung genügenden Dicke mit weiteren, insbesondere poröseren Schichten, die verfahrenstechnisch einfacher auf das Lagermaterial des Pleuels aufgebracht werden können, abgedeckt werden. Diese Schicht wiederum kann ohne größere Probleme bis in die eigentliche Gleitlagerschicht (gering poröse Schicht) abgetragen werden. Durch diese Verfahrensweise erreicht man einen Ausgleich der Schichteigenspannung, kein oder nur geringes Ausglühen des Pleuels und hohe Haftzugfestigkeiten der Gleitlagerschicht, die üblicherweise ≥ 20 N/mm² und insbesondere ≥ 25 N/mm² liegen. Auch Haftzugfestigkeiten oberhalb 28 N/mm² sind möglich. Mit Aluminiumbronze läßt sich beispielsweise eine Schichthärte von ca. 185 HV₀,₃ und höher erreichen.
Für höherbelastete Gleitlagerschichten im Pleuel, insbesondere dem großen Pleuelauge, wie sie vorwiegend bei Dieselmotoren vorliegen, ist es vorteilhaft, die Restölmenge innerhalb der Gleitiagerschicht zu erhöhen. Dies erfolgt durch eine Vergrößerung des Ölrückhaltevolumens bei Motorstillstand bzw. bei einer Motordrehzahl unterhalb der Leerlaufdrehzahl durch Einbringen einer oder mehrerer Schmiernuten in die Gleitlagerschicht. Hierdurch wird beim Motorstart oder Motorauslauf der Bereich der Mischreibung in einer kürzeren Zeit durchlaufen. Diese kürzere Zeit ist ein Resultat einer längeren Aufrechterhaltung bzw. schnelleren Bildung des Gleitfilms, der durch Adhäsion des Motoröles aus den Mikroporen und der oder den Nuten mit der Kurbelwelle resultiert. Durch das Einbringen mindestens einer Nut in die Lagerschicht, insbesondere mit einer etwas porösen Oberfläche, wird erreicht, daß der Schmierfilm "länger" hält, obwohl der Öldruck der Pumpe bereits abgefallen ist bzw. gerade aufgebaut wird. Besonders vorteilhaft ist der Nuteneffekt, wenn die Nuten überwiegend radial, d.h. in Umfangsrichtung, verlaufen. Besonders bevorzugt sind die Nuten dabei in sich geschlossen, d.h. eine Endlosnut und insbesondere eine ringförmige Endlosnut. Die Nut ist vorteilhaft in einer V- bzw. Trapezform ausgebildet, wobei die Seiten der Nut in einem Winkel von vorzugsweise 30 bis 80° und insbesondere 45 bis 60° zueinander stehen. Als Nuttiefe ist eine Tiefe im Bereich 0,2 bis 1 mm und insbesondere 0,4 bis 0,6 mm geeignet. Die Anzahl der Nuten richtet sich vorzugsweise nach der Gleitlagerbreite, dem Traganteil des Gleitlagers und dem erforderlichen zusätzlichen Ölrückhaltevolumen. Die angegebene Nutenform und -tiefe beziehen sich vorteilhaft auf den Zustand vor einer thermisch gespritzten Beschichtung. Als thermisch gespritzte Beschichtung kommt besonders bevorzugt das Plasmaspritzen zum Einsatz.

Vorzugsweise wird die Substratoberfläche nach dem Einbringen der einen oder mehreren Rillen mit der Gleitschicht beschichtet, insbesondere mit der Verbundlagerschicht mit unterschiedlicher Porosität, die oben beschrieben ist. Bei der anschließenden Nachbearbeitung der Lagerfläche werden vorzugsweise die Nuten nicht oder weniger nachgearbeitet, so daß die rauhe (Plasma-)Schichtstruktur eine besonders gute Ölrückhaltung bewirkt.

Bei dem Aufspritzen der Lagerschicht wird vorteilhaft ein Metall aufgespritzt. wobei bevorzugt Metallegierungen zum Einsatz kommen. Weiterhin kommt bevorzugt ein Gemisch verschiedener Metalle (insbesondere Metallegierungen) zum Einsatz. Ein solches Gemisch kann beispielsweise eine Mischung aus Aluminium und Zinn sein, wobei die Mischung besonders vorteilhaft durch Mischen der einzelnen Komponenten in Pulverform erhalten wird. Die Klassifikation des Metallpulvers ist u.a. von den einzelnen Spritzparametern abhängig und kann von dem Fachmann durch Versuchsreihen leicht ermittelt werden. Als Lagerwerkstoffe werden vorteilhaft eingesetzt Bronzen, insbesondere Aluminiumbronze (Aluminium/Zinn), aber auch Kupferbronze sowie auch Metall-Weichstoff-Schichten und/oder Metall-Festschmierstoff-Schichten. Als Weichstoff kommen beispielsweise weiche Metalle, wie Blei zum Einsatz, die in einem härteren Metall, wie beispielsweise legiertem Aluminium (Aluminium/Kupfer/Magnesium/Chrom) verteilt sind. Als Weichstoffe können aber auch andere Materialien, wie beispielsweise Fluorpolymere (z. B. Polytetrafluorethylen) eingesetzt werden. Als Festschmierstoff eignen sich beispielsweise Verbindungen wie Molybdändisulfid, Bornitrit oder Graphit.

Besonders vorteilhaft wird der Lagerwerkstoff mit Übermaß aufgespritzt, das anschließend mechanisch nachbearbeitet wird. Zum Nacharbeiten kommt beispielsweise ein Honen zum Einsatz, insbesondere ist hier Feinspindeln geeignet. Beim Honen werden bevorzugt 20 bis 300 µm und insbesondere 50 bis 200 µm des Lagerwerkstoffes abgetragen; beim Feinspindeln beträgt das Übermaß vorteilhaft 50 bis 1 000 µm und insbesondere 100 bis 500 µm.

Die fertige Lagerschicht (nach dem Abtragen des Übermaßes) beträgt vorzugsweise 150 bis 800 µm und insbesondere 200 bis 500 µm. Eine solche Schicht ist erheblich dünner als die üblichen Lagerschalen, deren Dicke im Bereich 2,5 mm liegt. Dies bedeutet, daß am Pleuel entweder mehr Material bestehen bleibt (höhere Belastung möglich), oder daß die Pleuel mit einem geringeren Gewicht hergestellt werden können.

Das Pleuelauge, das mit dem Lagerwerkstoff durch thermisches Spritzen beschichtet wird, kann vorteilhaft erst nach dem Aufbringen des Lagerwerkstoffes geöffnet werden. Diese Verfahrensweise kommt besonders dann zum Einsatz, wenn das Pleuelauge aufgebrochen (gecrackt) wird. Bei diesem Verfahren wird das Pleuelauge (innen) mit je einer Kerbe an den gewünschten Bruchstellen verstehen. Die Kerben werden besonders vorteilhaft mittels eines Lasers eingebracht, wobei beispielsweise ein FK-Laser unter ca. 45° in das Pleuelauge eingefahren wird. Als Laserleistung kommen insbesondere 5 bis 10 kW zum Einsatz. Die Kerbe wird vorteilhaft in einer Breite von 0,3 bis 0,8 mm und in einer Tiefe von 0,2 bis 0,7 mm eingebracht. Die Bruchstelle sitzt üblicherweise in etwa mittig in dem Pleuelauge. Alternativ kann die Kerbe auch durch Erodieren oder über ein Räumwerkzeug, beispielsweise durch Stoßen, eingebracht werden.

Beim Kerben und Brechen des Pleuelauges erfolgt der Verfahrensablauf vorteilhaft derart, daß zuerst das Pleuelauge gekerbt (z.B. mit einem Werkzeug, Laser oder durch Erodieren) wird, dann wird der Lagerwerkstoff durch thermisches Spritzen aufgebracht und anschließend erfolgt das Brechen. Durch diese Verfahrensweise entfällt der Spalt (bzw. wird minimiert) der sonst an der Bruchstelle bzw. zwischen den einzelnen Lagerschalen besteht. Ein solcher Spalt fördert bei einer hohen Motorbelastung den Abriß des Ölfilms. Durch die Verfahrensweise des Kerbens vor dem Beschichten des Lagerwerkstoffes erreicht man bessere Schmiereigenschaften. Unter Umständen kann auch ein Brechen vor dem Beschichten des Lagerwerkstoffes erfolgen, der dann anschließend nochmal (bevorzugt ohne Kerbung) gebrochen wird.

Wenn das Pleuelauge durch Aufschneiden geöffnet wird, erfolgt dies vorzugsweise vor dem Aufbringen des Lagerwerkstoffes durch thermisches Spritzen. Bei dieser Verfahrensweise wird das Pleuelauge aufgeschnitten und die Trennflächen der verbliebenen Pleuelstange und des Pleueldeckels werden einzeln glatt geräumt. Die Teile werden anschließend wieder zusammengesetzt, mit Bohrungen und Gewinden versehen und zusammengeschraubt. Vorteilhaft wird in das wieder zusammengeschraubte Pleuelauge auch hier eine Kerbe (an der Trennstelle) eingebracht, insbesondere vor dem Beschichten mit dem Lagerwerkstoff. Anschließend wird das Pleuelauge zur Trennung der Lagerschicht vorteilhaft wieder aufgebrochen. Wenn das Brechen hierbei zu ungleichmäßig erfolgt, muß die Lagerschicht selbst gekerbt werden.

Das oben beschriebene Bearbeiten der Lagerschicht (Honen oder Spindeln) erfolgt besonders vorteilhaft erst nach dem Öffnen des Pleuelauges. Hierdurch wird ein eventuell beim Brechen der Lagerschicht entstehender Grat an der Bruchkante gleichzeitig mit der Entfernung des Übermaßes entfernt.

In das erfindungsgemäß hergestellte Pleuel kann auch ein Ölkanal in das Pleuelauge eingebracht werden. Dieser Ölkanal wird vorteilhaft erst nach dem Aufbringen der Lagerschicht und insbesondere nach deren Nachbearbeitung in das Pleuelauge gebohrt. Der Ölkanal kann hierbei auch durch die Pleuelstange hindurch zu dem gegenüberliegenden Pleuelauge gebohrt werden.

Auch die Planflächen (große Seitenflächen) des Pleuels werden vorteilhaft erst nach dem Aufbringen der Lagerschicht nachgearbeitet. Die Nachbearbeitung erfolgt hier vorzugsweise durch Schleifen der Planflächen.

Bei dem erfindungsgemäßen Verfahren wird dem Beschichten vorteilhaft ein Arbeitsschritt vorgeschaltet, in dem das Pleuelauge aufgerauht wird. Besonders vorteilhaft erfolgt das Aufrauhen durch Sandstrahlen, es ist jedoch auch ein Strahlen mit einer unter hohem Druck stehenden Flüssigkeit möglich. Das Material des Auges, insbesondere ein C 70 Stahl , wird hierbei vorteilhaft auf eine Mittenrauhtiefe Rₐ von 4 bis 30 µm, insbesondere 8 bis 12 µm aufgerauht. Bei solchen Mittenrauhtiefen wird eine besonders gute Haftung des Lagerwerkstoffes auf dem Material des Pleuelauges erreicht.

Für eine besonders vorteilhafte Fertigung der Lagerschicht in dem Pleuelauge wird mindestens eine der Planflächen des Pleuelauges mit einer Schablone abgedeckt, die eine Öffnung im Bereich des Pleuelauges aufweist. Diese Öffnung soll in etwa gleich groß sein wie das Pleuelauge, so daß der Beschichtungsvorgang durch die Schablone zum einen nicht gestört wird und zum anderen eine Beschichtung der Planfläche im Bereich des Pleuelauges weitgehend vermieden wird. Wenn nur eine Planfläche mit der Schablone abgedeckt wird, dann liegt die andere Planfläche vorteilhaft auf einer Palette, die im Bereich des Pleuelauges ebenfalls eine Öffnung, wie die Schablone, aufweist.

Die Pleuelaugen einzelner Pleuel werden vorteilhaft in einem Arbeitsgang beschichtet. Hierzu liegen mehrere Pleuel, vorteilhaft 2 bis 10 und insbesondere 4 bis 8 derart übereinander, daß die zu beschichtenden Pleuelaugen einen Zylinder bilden. Hierzu kann auf einer Spezialpalette eine die Pleuel zentrierende Halterung vorgesehen sein, in die die Pleuel eingelegt werden. Vorteilhaft werden die bei diesem Verfahren praktisch gleichzeitig beschichteten Pleuel als Gruppe beibehalten, um anschließend in einer Verbrennungskraftmaschine gemeinsam verbaut zu werden. Vorteilhaft werden alle (gleichartigen) Pleuel einer Verbrennungskraftmaschine durch Übereinanderlegen gemeinsam beschichtet. Wenn dies wegen der Anzahl der Zylinder (beispielsweise 12-Zylinder) konstruktiv nicht möglich ist, dann werden zumindest die Pleuel einer Zylinderreihe (6 beim V 12-Motor) übereinanderliegend beschichtet. Mit dieser Verfahrensweise wird erreicht, daß Pleuel gleicher Qualität in einer Verbrennungskraftmaschine verbaut werden.

Während des thermischen Spitzens wird besonders vorteilhaft ein Gasstrom durch das Pleuelauge hindurchgeführt, insbesondere wenn mehrere Pleuel übereinanderliegend beschichtet werden. Als Gasstrom eignet sich insbesondere Luft, die konditioniert und gereinigt wird. Insbesondere soll der Luftstrom praktisch frei von Fett und Feuchtigkeit sein und möglichst in einem vorgegebenen Temperaturbereich (um ca. 20 °C) liegen. Der Luftstrom hat vorteilhaft eine Strömungsgeschwindigkeit (Luftsinkgeschwindigkeit) von 3 bis 15 m/s und insbesondere 5 bis 8 m/s. Mit dem Gasstrom wird ein beim Spritzen entstehender Overspray weggeblasen.

Das Spritzen des Lagerwerkstoffes erfolgt vorzugsweise mit einer rotierenden Spritzdüse, die insbesondere bereits oberhalb des Pleuelauges rotierend in das Pleuelauge (bzw. die Pleuelaugen) eingefahren wird. Mit einer solchen Spritzdüse wird eine besonders gleichmäßige Beschichtung im Pleuelauge erreicht. Die Spritzdüse wird bei dem erfindungsgemäßen Beschichten des Pleuelauges mit einem Vorschub von vorzugsweise 0,5 bis 20 mm/s, insbesondere 2 bis 8 mm/s in das Plasmaauge hinein und durch dieses hindurchgeführt.

Beim Spritzauftrag werden besonders bevorzugt mehrere Schichten des Lagerwerkstoffes auf dem Pleuelauge aufgetragen, wobei insbesondere 4 bis 30 Schichten in dem Pleuelauge gebildet werden. Die Schichten werden dabei vorteilhaft in unterschiedlichen Richtungen aufgetragen, was wiederum der Verbesserung der Schichtqualität dient. Dies wird beim Pleuelauge dadurch erreicht, daß die Spritzdüse das Pleuelauge während des Hineinfahrens und während des Hinausfahrens beschichtet, wobei eine rotierende Spritzdüse vorzugsweise ihre Rotationsrichtung beibehält.

Vorteilhaft werden die Pleuel in einer Serienfertigung mit dem Lagerwerkstoff beschichtet. Hierbei ist es vorteilhaft, wenn zumindest einzelne Pleuel der Serie vermessen werden. Vermessen wird hierbei insbesondere die Mittenrauhtiefe Rₐ und/oder der Lagerwerkstoff selbst (z. B. die Gleichmäßigkeit der Verteilung des Lagerwerkstoffes beim Einsatz eines Gemisches). Besonders bevorzugt erfolgt das Vermessen der Pleuel zerstörungsfrei.

Die Erfindung wird im folgenden anhand von Zeichnungen und Ausführungsbeispielen näher beschrieben.

Es zeigen:
- Figur 1: ein Pleuel in Frontansicht;
- Figur 2: das Pleuel in Seitenansicht;
- Figur 3: einen Schichtaufbau in dem großen Pleuelauge;
- Figur 4: einen Pleueldeckel mit einem Kurbelwellenlagerzapfen und mikroporöser Lagerschicht;

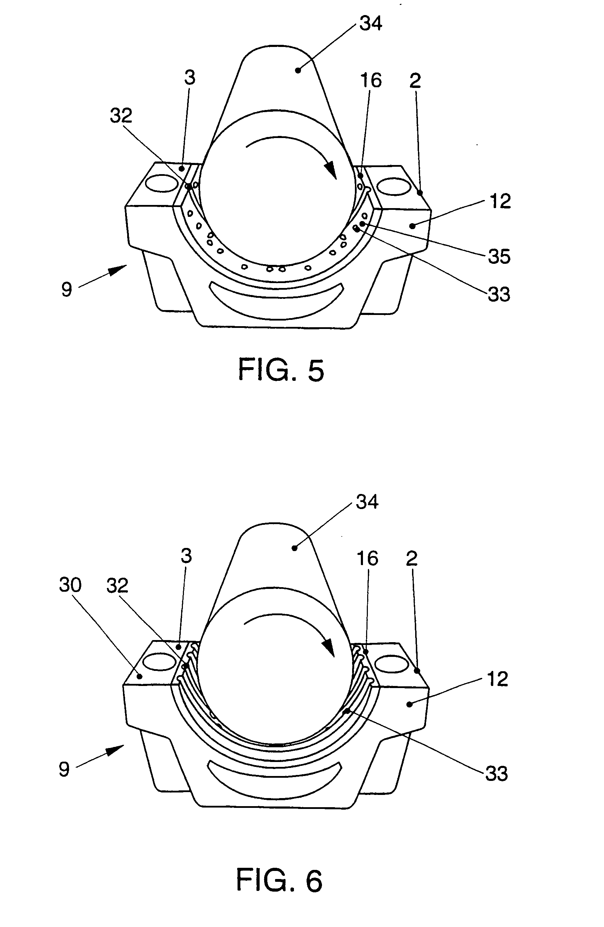

- Figur 5: den Pleueldeckel aus Figur 4 mit einer Radiaischmiernut; und
- Figur 6: einen Pleueldeckel mit mehreren Radialschmiernuten.

Die aufgeführten Verfahrensschritte sind nur zum Teil zwangsgekoppelt. Grundsätzlich können einzelne Verfahrensschritte weggelassen, ergänzt, alternativ ausgeführt und/oder mit anderen vertauscht werden.

### Fertigungsablauf Crackpleuel

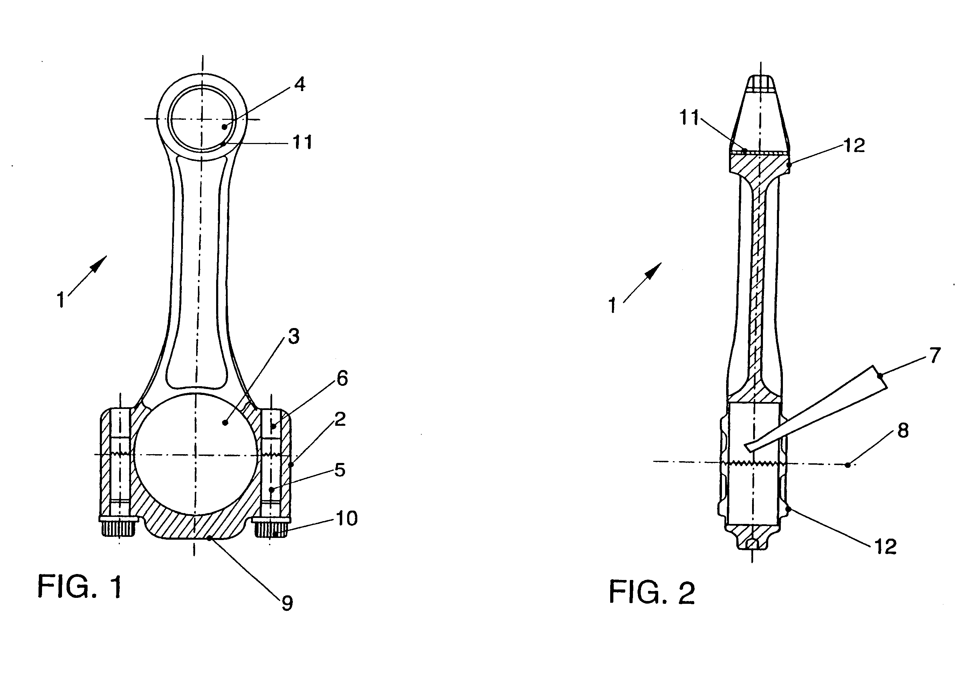

Übliche Pleuel 1 (Fig. 1 und 2), wie sie beispielsweise bisher mit Lagerschalen versehen wurden, z. B. aus C 70 Stahl, werden auf eine Fertigungsstraße gelegt. Hieran schließt sich das Vorschleifen der Seitenflächen 2 an. Anschließend werden das große und das kleine Pleuelauge 3,4 vorbearbeitet, d. h. auf Maß gebracht. Außerdem erfolgt die Schraublochbearbeitung für den Pleueldeckel 9 in den Seitenflächen 2, d. h. es werden Bohrungen 5 und Gewinde 6 eingebracht.

Zur Vorbereitung des Crackens wird in das große Pleuelauge 3 ein FK-Laser 7 unter einem Winkel von 45° eingefahren. Mittels des Lasers 7 wird beidseitig und mittig in das große Pleuelauge 3 je eine Kerbe 8 in einer Breite von ca. 0,5 mm und einer Tiefe von ca. 0,3 bis 0,5 mm eingebrannt. Alternativ kann die Kerbe auch über ein Räumwerkzeug eingebracht werden.

Nachdem die Kerben 8 eingebracht wurden, wird das große Pleuelauge 3, wie weiter unten beschrieben, plasmabeschichtet. Nach dem Auftrag der Plasmaschicht wird das große Pleuelauge 3 zusammen mit der Plasmaschicht über eine Brechvorrichtung mit einer Brechkraft von ca. 100 kN gecrackt. Die Bruchstelle wird gereinigt (mit Druckluft abgeblasen) und der abgebrochene Pleuellagerdeckel 9 mit Schrauben 10 mit dem vorgesehenen Drehmoment montiert. Auch das kleine Pleuelauge wird durch Einpressen einer Buchse 11 montiert. Danach werden die Planflächen 12 fertiggeschliffen.

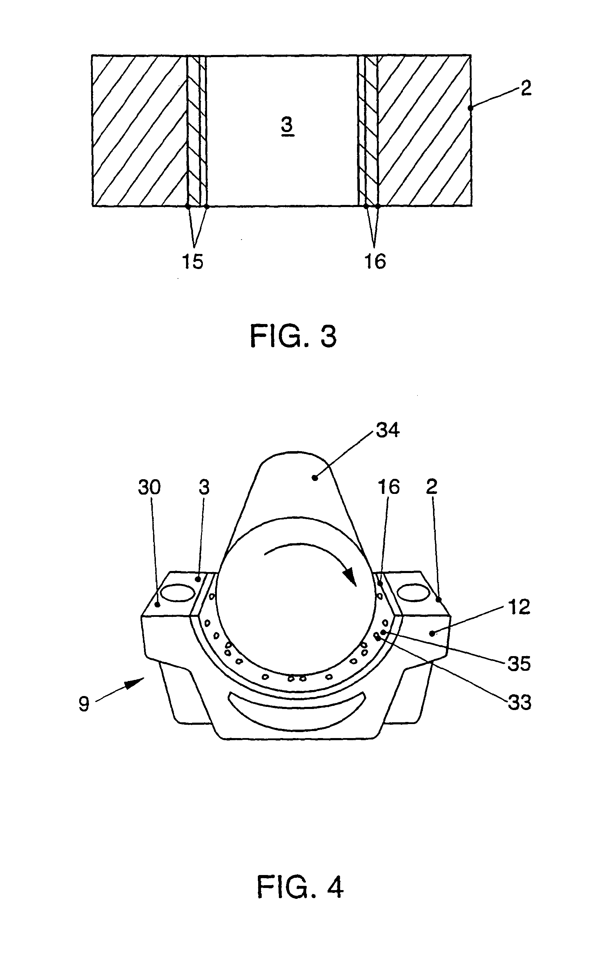

Das große Pleuelauge 3 und ggf. auch das kleine Pleuelauge 4 werden nun auf Maß 16 (Fig. 3) gebracht. Dies geschieht durch Feinbohren bzw. Feinspindeln. Anschließend wird das Pleuel einer kompletten Reinigung unterzogen, vermessen und klassiert.

### Fertigungsablauf geschnittenes Pleuel

Der Fertigungsablauf für ein geschnittenes Pleuel ist im wesentlichen mit dem oben beschriebenen Ablauf gleich, es wird jedoch das Pleuelauge bereits nach dem Räumen der Seitenflächen, der Kopfflächen und Schraubenauflagen durch Aufschneiden getrennt. Nach dem Aufschneiden werden die Trennflächen auf der Pleuelstange und dem Pleueldeckel einzeln geräumt. Hieran schließt sich ein Waschschritt an, nach dem das kleine Pleuelauge vor- und fertigbearbeitet wird. Nun werden die Deckelschrauben durch Einbringen von Bohrungen und Gewinden in die Seitenflächen eingebracht. Die Trennflächen an Pleuelstange und Pleueldeckel werden fertiggeschliffen, nochmal gewaschen und der Pleueldeckel auf die Pleuelstange montiert. Die Schnittfläche wird wieder mit einem FK-Laser gekerbt und anschließend wird das große Pleuelauge mit der Lagerschicht versehen, die anschließend wieder gebrochen wird.

Einzelne Fertigungsschritte, wie beispielsweise das Einpressen der Lagerschale 11 in das kleine Pleuelauge 4 können an unterschiedlichen Stellen des Gesamtablaufs erfolgen, beispielsweise auch bereits vor der Plasmabeschichtung.

### Fertigungsablauf Plasmabeschichtung des großen Pleuelauges

Für die Plasmabeschichtung werden die Pleuel gewaschen und das große Pleuelauge mit Heißdampf entfettet, danach praktisch Restfeuchte frei getrocknet. Die so vorbehandelten Pleuel werden zu 4 bis 8 Stück übereinander gestapelt, so daß die großen Pleuelaugen konzentrisch auf einer entsprechenden Öffnung einer Spezialpalette liegen. Die Pleuel werden dabei vorteilhaft über das vorbearbeitete kleine Pleuelauge und die Pleuelstange bzw. Seitenflächen ausgerichtet und fixiert. Die beladenen Paletten gelangen über eine Bereitstellzone in eine Sandstrahleinheit, in der das große Pleuelauge durch Sandstrahlen auf eine Mittenrauhtiefe Rₐ von ca. 8 bis 12 µm gebracht wird. Anschließend werden die Pleuel in eine Reinigungsstation gefahren und die gestrahlte Oberfläche mit Druckluft ab- bzw. ausgeblasen. Die vorbehandelten Pleuel fahren schließlich in die Plasmastation, in der das große Pleuelauge mit einem rotierenden Plasmabrenner in einer Schichtdicke 15 von ca. 0,5 mm mit einer Aluminiumbronze beschichtet wird (Fig. 3). Die beschichteten Pleuel kommen danach in eine Kühlzone, von der die abgekühlten Pleuel von der Spezialpalette entnommen und der oben beschriebenen Weiterbearbeitung zugeführt werden.

Die erfindungsgemäß hergestellten Pleuel haben den Vorteil, daß sie im großen Pleuelauge keine Lagerschale enthalten, somit entfällt auch die Lagerschalenmontage selbst sowie das Einbringen von Haltenuten bzw. das Entgraten der Lagerschalen. Hierdurch wird das Aufbringen der Plasmaschicht kostenmäßig wettbewerbsfähig. Außerdem ist bei den plasmabeschichteten Pleueln die Montagesicherheit erhöht, da keine Lagerschalen bei der Montage ausgelassen werden können.

Die erfindungsgemäßen Pleuel haben am großen Pleuelauge eine größere Stegbreite im Bereich der Lagerdeckelbefestigung, da die Plasmaschicht nach der Nachbearbeitung nur ca. 0,3 mm dick ist, eine Lagerschale jedoch 2,5 mm aufträgt. Hierdurch ist eine höhere Pleuelbelastung für höherbelastete Motoren und/oder eine Gewichtsersparnis möglich. Außerdem entfällt der Spalt zwischen zwei Lagerschalenhälften, an dem bei einer höheren Belastung der Ölfilm abzureißen beginnt. Die erfindungsgemäß hergestellten Pleuel haben somit bessere Schmiereigenschaften.

### Applikationsablauf

Wie bei den oben beschriebenen Fertigungsabläufen beschrieben, kann die Reinigung der zu beschichtenden und mit Radialnuten versehenen Oberfläche mit Heißdampf erfolgen. Hierbei wird eine praktisch 100 %ige Fettfreiheit erreicht. Das Aufrauhen der Substratoberfläche (Eisenwerkstoff, z.B. C 70) erfolgt durch eine mehrfache Sandstrahlbehandlung mit Al₂O₃ bei ca. 4 bis 6 bar Strahldruck und mit aufsteigender Körnung: Eine erste Strahloperation für die erodierte Bruchkerbe beim Crackpleuel oder beschnittenem Pleuel mit einer Körnung ∅ 0,063 bis 0,15 mm (230 bis 100 mesh). Eine zweite Strahloperation für die Substratoberfläche und die Radialnut mit einer Körnung ∅ 0,18 bis 0,35mm (80 bis 45 mesh) und eine dritte Strahloperation für die Substratoberfläche und die Radialnut mit einer Körnung von ∅ 0,6 bis 1,1 mm (30 bis 16 mesh). Als weiterer Arbeitsschritt schließt sich die Plasmabeschichtung mit einer Aluminium-Kupfer-Eisen-Legierung an, wobei beispielsweise eine Alubronze mit 5 bis 15 % Aluminium, 1 bis 5 % Eisen, 1 bis 4 % Kobalt und 0,5 bis 4 % Mangan, insbesondere Aluminium 9 bis 12 %, Mangan ca. 2 %, Kobalt ca. 2 bis 2,5 % und Eisen ca. 3 bis 4 % zum Einsatz kommen kann. Es erfolgt eine erste Plasmabeschichtung mit einer Schichtdicke von ca. 200 bis 250 µm mit einer Pulverkorngröße des Beschichtungsmaterials von durchschnittlich ca. 38 µm, wobei mit den Auftragsparametern, bezogen auf den jeweils verwendeten Brenner, eine Porosität in der Schicht ≤ 1 % eingestellt wird. Ohne Unterbrechung wird mit einem etwas gröberen Pulverkorn (∅ ca. 65 µm) weiterbeschichtet, wobei wiederum eine Schichtdicke von 200 bis 250 µm gebildet wird. Die Anlagenparameter werden hierbei so eingestellt, daß eine Porosität im Bereich 1,5 bis 3,5 % erreicht wird.

Diese Art der Beschichtung kann auch bei Lagern ohne Radialnuten durchgeführt werden.

### Fertigungsablauf geschnittenes Pleuel mit Radialnuten

Im folgenden wird der gesamte Fertigungsablauf beschrieben, einzelne Arbeitsschritte können, wie bereits erwähnt, je nach Arbeitsplanung entfallen, vertauscht, ergänzt oder gegen andere ersetzt werden.

Nach der Anlieferung der Rohpleuel werden diese auf die Fertigungsstraße gelegt, auf der ein Vorschleifen und Räumen der Planflächen 12 erfolgt. Anschließend werden die Seitenflächen 2, Kopfflächen und Schraubenauflagen geräumt und das große Pleuelauge getrennt. Danach folgt ein Räumen der Trennflächen 30 und des großen Pleuelauges 3, wobei die Pleuelstange und der Pleueldeckel 9 einzeln bearbeitet werden. Nach dem Waschen der Teile wird das kleine Pleuelauge 4 vor- und fertigbearbeitet und für die Pleueldeckelschrauben 10 werden die Bohrungen und Gewinde geschnitten. In das kleine Pleuelauge 4 wird die Lagerbuchse 11 eingepreßt, angepreßt und gefast. Die Trennflächen 30 der Pleuelstange und des Pleueldeckels 9 werden fertiggeschliffen und das ganze nochmals gewaschen.

Hiernach wird der Pleueldeckel 9 auf der Pleuelstange auf das vorgesehene Drehmoment angezogen und - beim Einsatz von Radialnuten 32 - die Nuten in das große Pleuelauge eingebracht, beispielsweise durch Fräsen oder Drehen.

Für ein späteres Öffnen der Plasmaschicht 15 oder 16 wird eine Bruchkerbe in das große Pleuelauge eingebracht, beispielsweise durch Erodieren oder Lasern. Hieran schließt sich die Plasmabeschichtung des großen Pleuelauges an.

Bei Bedarf, je nach Pleuelart, kann ein Ölkanal (vom großen Pleuelauge bis zum kleinen Pleuelauge durch die Pleuelstange hindurch) gebohrt werden, dies kann bei Benzinmotoren erfolgen und erfolgt meistens bei Dieselbrennkraftmaschinen.

Die aufgetragene Plasmaschicht 15 wird durch Lösen der Pleueldeckelschrauben 10 gecrackt, dies erfolgt - je nach Plasmabeschichtung - oftmals bereits durch die Eigenspannung der Plasmaschicht 15. Der Pleueldeckel 9 wird abgenommen und die Bruchstelle gereinigt, beispielsweise durch Abblasen. Anschließend wird der Pleueldeckel 9 wieder montiert und die Pleueldeckelschrauben 10 auf Drehmoment angezogen. Das große Pleuelauge wird beidseitig gefast und, je nach Alternative, werden die Kanten der Radialnuten gebrochen (gerundet).

Hiernach werden die Planflächen 12 fertiggeschliffen, das kleine Pleuelauge 4 fertiggebohrt und das große Pleuelauge 3 fertiggespindelt zur Erzeugung der eigentlichen Lauffläche 35 und Freilegen der Microporen 33 auf der Lagerschicht 16. Nach einem weiteren Waschvorgang werden die Pleuel vermessen und klassifiziert, wobei bevorzugt zwei Toleranzklassen gewählt werden.

Die so hergestellten Pleuel werden an der Montagelinie demontiert und an der Montagelinie auf der Kurbelwelle 34 einer Brennkraftmaschine montiert.

Nach der Plasmabeschichtung des großen Pleuelauges und gegebenenfalls Bohren des Ölkanals kann auch bereits das große Pleuelauge beidseitig gefast werden und, je nach Alternative, das Brechen der radialen Nutenkanten erfolgen. Hieran schließt sich dann das Fertigschleifen der Planflächen an, das kleine Pleuelauge wird fertiggebohrt und das große Pleuelauge fertiggespindelt. Nach einem Waschen und Vermessen der Pleuel mit Klassifizierung erfolgt dann, insbesondere direkt an der Montagelinie, das Cracken der Plasmaschicht durch Lösen der Pleueldeckelschrauben. Der Pleueldeckel wird abgenommen und die Bruchstelle durch beispielsweise Abblasen gereinigt. Dann wird das Pleuel auf der Kurbelwelle der Brennkraftmaschine montiert.

Vorteilhaft wird im Pleuel eine Verdrehsicherung des Deckels vorgesehen, beispielsweise durch einen leichten Versatz der Pleueldeckelschrauben-Bohrungen, damit die beim Cracken in der Plasmaschicht entstehenden Zacken wieder identisch zueinander geführt werden.

### Fertigungsablauf Crackpleuel

Das Rohpleuel (Material beispielsweise C70) wird auf die Fertigungsstraße gelegt und vorgeschliffen, wobei die Seitenwangen plan geschliffen werden. Es erfolgt die Vorbearbeitung des großen und kleinen Pleuelauges und die Schraubenlochbearbeitung für den Lagerdeckel (Bohren und Gewindeschneiden). Je nach Lagerart werden gewünschtenfalls eine oder mehrere Radialnuten in das große Pleuelauge eingebracht, beispielsweise durch Fräsen oder Drehen. Anschließend wird das große Pleuelauge gekerbt, beispielsweise mit einem FK-Laser, der unter 45° in das große Pleuelauge eingefahren wird; Laserleistung ca. 7 kW. Hierbei wird beidseitig eine Kerbe von ca. knapp 2 mm Breite und knapp 0,5 mm Tiefe mittig in das große Pleuelauge eingebracht.

Die Kerbe kann auch über ein Räumwerkzeug oder durch Erodieren eingebracht werden. Das Pleuelauge wird über eine Brechvorrichtung mit einer Brechkraft von ca. 100 kN gecrackt. Der Pleuellagerdeckel wird abgenommen und die Bruchstelle, beispielsweise durch Druckluft, gereinigt. Der Pleuellagerdeckel wird anschließend wieder montiert und die Pleuellagerdeckelschrauben auf Drehmoment angezogen. Danach wird das große Pleuelauge plasmabeschichtet und in das kleine Pleuelauge die Lagerbuchse eingepreßt. Das große Pleuelauge wird beidseitig gefast, die Pleuelwangen werden fertiggeschliffen und das große und kleine Pleuelauge feingebohrt bzw. feingespindelt. Anschließend erfolgt eine komplette Reinigung (Waschen) und eine Vermessung und Klassifizierung des Pleuels. An der Montagelinie wird das Pleuel demontiert und auf die Kurbelwelle für eine Brennkraftmaschine montiert.

Das Cracken der Plasmaschicht, insbesondere durch Lösen der Pleueldeckelschrauben, kann direkt an der Montagelinie oder auch zu einem vorherigen Zeitpunkt erfolgen. Nach dem Cracken der Plasmaschicht ist es empfehlenswert die Pleueldeckelbruchstelle zu reinigen (abzublasen).

### Fertigungsablauf der Plasmabeschichtung

Das Pleuel wird gewaschen und zumindest das große Pleuelauge mit Heißdampf entfettet und anschließend auf einen möglichst niedrigen Restfeuchtegehalt getrocknet. Mehrere Pleuel werden auf einer Spezialpalette übereinander konzentrisch zum großen Pleuelauge gestapelt (in der Regel 4 bis 8 Pleuel). Die Fixierung kann hierbei über das kleine Pleuelauge und die Pleuelstange bzw. die Seitenflächen erfolgen. Die beladene Spezialpalette wird über eine Neutralzone in eine Sandstrahleinheit eingefahren und positioniert. Das große Pleuelauge wird mit den oben beschriebenen Sandklassifikationen auf eine Mittenrauhtiefe von ca. 6,5 bis 8 µm sandgestrahlt. Anschließend fährt die Spezialpalette mit den sandgestrahlten Pleueln in eine Reinigungsstation, in der die gestrahlte Oberfläche mit Druckluft abgeblasen bzw. ausgeblasen wird. Weiter fährt die Spezialpalette in die Plasmastation, in der das große Pleuelauge zuerst mit einer geringporösen und anschließend mit einer etwas poröseren Schicht aus Aluminiumbronze in einer Gesamtstärke von 0,5 mm plasmabeschichtet wird. Die beschichteten Pleuel fahren in eine Kühlzone, um nach dem Abkühlen von der Palette zur Weiterbearbeitung genommen zu werden.

Die vorliegende Erfindung hat den Vorteil, daß die Lagerschalen und deren Montage sowie die Haltenuten und das Entgraten hierfür entfallen kann. Hierdurch wird die Montagesicherheit erhöht. Durch die Plasmabeschichtung erhält man eine größere Stegbreite (kleinerer Pleuelaugen-Durchmesser) im Bereich der Lagerdeckelbefestigung, da der Lagerschalendicke von ca. 2,5 mm eine Plasmaschicht von weniger als 0,5 mm gegenübersteht. Hierdurch ist eine höhere Pleuelbelastung in höher belasteten Motoren bzw. eine gewisse Ersparnis möglich. Außerdem entfällt der Spalt zwischen zwei Lagerschalenhälften, der konstruktionsbedingt unter Umständen zu einem Ölfilmabriß führen kann. Mit der Plasmabeschichtung erreicht man bessere Schmiereigenschaften. Gleichzeitig werden die Toleranzen reduziert, da eine Toleranzklasse durch die Plasmabeschichtung entfällt. Hiermit erreicht man durch geringere Fertigungstoleranzen einen besseren Motorlauf. Durch den Einsatz von Radialnuten in der Plasmabeschichtung erreicht man eine höhere Lagerbelastung und eine Reduzierung der Mischreibungszeit. Das Mikrodruckkammersystem verbessert die Reibwerte, insbesondere in Kombination mit einer oder mehreren Nuten. Die Nuten können auch mit einem anderen Gleitlagermaterial beschichtet werden, das nach einer spanabhebenden Bearbeitung der Beschichtung im wesentlichen nur noch in den Nuten vorliegt. Solche Lagermaterialien können auf Basis Blei, Zinn oder auch Nickel sein. Auch hiermit werden höhere Lagerbelastungen bzw. Standzeiten möglich.

## Patentansprüche

1. Verfahren zum Herstellen eines Pleuels mit einem Pleuelauge, in dem eine Lagerschicht angeordnet ist, die durch thermisches Spritzen eines Lagerwerkstoffes auf das Pleuelauge aufgebracht wird, wobei der Lagerwerkstoff im Verlauf des thermischen Spritzens mit unterschiedlichen Temperaturen auf dem Pleuelauge abgeschieden wird, **dadurch gekennzeichnet, dass** die Temperatur durch Veränderung des Stromes bzw. der Spannung an einem Brenner, insbesondere Plasmabrenner, durch Veränderung der Brenngasmenge und/der durch Veränderung der Kühlgasmenge verändert wird.

2. Verfahren nach Anspruch 1, **dadurch gekennzeichnet, dass** eine Temperatur, insbesondere die Anfangstemperatur, mit der der Lagerwerkstoff auf dem Pleuelauge abgeschieden wird, so hoch gewählt wird, dass beim Abscheiden der gesamten Lagerschicht mit dieser Temperatur der Werkstoff des Pleuelauges ausglühen würde.

3. Verfahren nach Anspruch 1 oder 2, **dadurch gekennzeichnet, dass** die Abscheidetemperatur des Lagerwerkstoffes im Verlaufe des thermischen Spritzens abnimmt.

4. Verfahren nach zumindest einem der vorhergehenden Ansprüche, **dadurch gekennzeichnet, dass** der thermisch gespritzte Lagerwerkstoff mechanisch nachbearbeitet wird, insbesondere spanabhebend.

5. Verfahren nach einem der vorhergehenden Ansprüche 3 und 4, **dadurch gekennzeichnet, dass** der Lagerwerkstoff der bei einer niedrigen Temperatur abgeschieden wurde, zumindest teilweise abgetragen wird.

6. Verfahren nach einem der vorhergehenden Ansprüche, **dadurch gekennzeichnet, dass** die Temperatur auch durch Veränderung der Zufuhr des Lagerwerkstoffs geändert wird, wobei die Änderung der Zufuhr des Lagerwerkstoffes eine Änderung im Material des Lagerwerkstoffes und/oder eine Änderung der Partikelgröße des zugeführten Lagerwerkstoffes und/oder eine Änderung der zugeführten Lagerwerkstoffmenge pro Zeiteinheit vorgesehen ist.

7. Verfahren nach einem der vorhergehenden Ansprüche, **dadurch gekennzeichnet, dass** das Pleuelauge vor dem Aufbringen der thermisch gespritzten Lagerschicht mit einem Partikelstrahl aufgerauht wird.

8. Verfahren nach einem der vorhergehenden Ansprüche, **dadurch gekennzeichnet, dass** das Pleuelauge auf eine Mittenrauhtiefe R_{A} von 4 bis 30 µm, insbesondere 6 bis 12 µm aufgerauht wird.

9. Verfahren nach einem der vorhergehenden Ansprüche, **dadurch gekennzeichnet, dass** der Lagerwerkstoff mittels Plasmaspritzen aufgebracht wird.

10. Verfahren nach einem der vorhergehenden Ansprüche, **dadurch gekennzeichnet, dass** als Lagerwerkstoff ein Metall, insbesondere eine Metallegierung, aufgebracht wird.

11. Verfahren nach einem der vorhergehenden Ansprüche, **dadurch gekennzeichnet, dass** mehrere Pleuel mit ihren mit dem Lagerwerkstoff zu beschichtenden Pleuelauge konzentrisch übereinanderliegend behandelt werden.

12. Verfahren nach einem der vorhergehenden Ansprüche, **dadurch gekennzeichnet, dass** der Lagerwerkstoff in einer Dicke, ggf. nach einer Nachbearbeitung, von 150 bis 800 µm, insbesondere 200 bis 500 µm hergestellt wird.

13. Verfahren nach einem der vorhergehenden Ansprüche, **dadurch gekennzeichnet, dass** das Pleuelauge durch Kerben und Brechen geöffnet wird.

## Claims

1. Method for producing a connecting rod with a connecting-rod eye, in which a bearing layer is arranged, applied to the connecting-rod eye by thermal spraying of a bearing material, wherein the bearing material is deposited on the connecting-rod eye at different temperatures over the course of the thermal spraying, **characterized in that** the temperature is changed by varying the current or the voltage on a torch, in particular a plasma torch, by varying the amount of fuel gas and/or by varying the amount of cooling gas.

2. Method according to Claim 1, **characterized in that** the temperature, in particular the initial temperature, at which the bearing material is deposited on the connecting-rod eye is selected to be so high that the material of the connecting-rod eye would burn out if the entire bearing layer were deposited at this temperature.

3. Method according to Claim 1 or 2, **characterized in that** the temperature at which the bearing material is deposited decreases over the course of the thermal spraying.

4. Method according to at least one of the preceding claims, **characterized in that** the thermally sprayed bearing material is mechanically finished, in particular by machining.

5. Method according to either of the preceding Claims 3 and 4, **characterized in that** at least some of the bearing material deposited at a low temperature is removed.

6. Method according to one of the preceding claims, **characterized in that** the temperature is also changed by varying the supply of the bearing material, wherein the variation in the supply of the bearing material is provided by a change in the material of the bearing material and/or a change in the particle size of the bearing material supplied and/or a change in the amount of bearing material supplied per time unit.

7. Method according to one of the preceding claims, **characterized in that**, before the thermally sprayed bearing layer is applied, the connecting-rod eye is roughened by a jet of particles.

8. Method according to one of the preceding claims, **characterized in that** the connecting-rod eye is roughened to an average roughness RA of 4 to 30 µm, in particular 6 to 12 µm.

9. Method according to one of the preceding claims, **characterized in that** the bearing material is applied by means of plasma spraying.

10. Method according to one of the preceding claims, **characterized in that** a metal, in particular a metal alloy, is applied as the bearing material.

11. Method according to one of the preceding claims, **characterized in that** a number of connecting rods are treated with their connecting-rod eyes that are to be coated with the bearing material lying concentrically one on top of the other.

12. Method according to one of the preceding claims, **characterized in that** the bearing material is produced in a thickness, if appropriate after finishing, of 150 to 800 µm, in particular 200 to 500 µm.

13. Method according to one of the preceding claims, **characterized in that** the connecting-rod eye is opened by notching and rupturing.

## Revendications

1. Procédé pour fabriquer une bielle avec une tête de bielle, dans laquelle est disposée une couche formant coussinet, qui a été appliquée par projection à chaud d'un matériau antifriction sur la tête de bielle, dans lequel le matériau antifriction est déposé avec différentes températures sur la tête de bielle au cours de la projection à chaud, **caractérisé en ce que** l'on fait varier la température en faisant varier l'intensité ou la tension à un brûleur, en particulier à un brûleur à plasma, en faisant varier le débit de gaz combustible et/ou en faisant varier le débit de gaz de refroidissement.

2. Procédé selon la revendication 1, **caractérisé en ce que** l'on choisit une haute température, en particulier la température initiale à laquelle le matériau antifriction est déposé sur la tête de bielle, telle que, lors du dépôt de toute la couche formant coussinet avec cette température, le matériau de la tête de bielle serait surchauffé.

3. Procédé selon la revendication 1 ou 2, **caractérisé en ce que** la température de dépôt du matériau antifriction diminue au cours de la projection à chaud.

4. Procédé selon au moins une des revendications précédentes, **caractérisé en ce que** le matériau antifriction projeté à chaud est réusiné mécaniquement en particulier par enlèvement de copeaux.

5. Procédé selon l'une quelconque des revendications précédentes 3 et 4, **caractérisé en ce que** le matériau antifriction qui a été déposé à une basse température est au moins en partie enlevé.

6. Procédé selon l'une quelconque des revendications précédentes, **caractérisé en ce que** l'on fait également varier la température en faisant varier l'apport du matériau antifriction, dans lequel la variation de l'apport du matériau antifriction est prévue sous la forme d'une variation de la matière du matériau antifriction et/ou d'une variation de la taille des particules du matériau antifriction apporté et/ou d'une variation de la quantité de matériau antifriction apportée par unité de temps.

7. Procédé selon l'une quelconque des revendications précédentes, **caractérisé en ce que** l'on rend la tête de bielle rugueuse avec un jet de particules avant l'application de la couche formant coussinet par projection à chaud.

8. Procédé selon l'une quelconque des revendications précédentes, **caractérisé en ce que** l'on confère à la tête de bielle une profondeur de rugosité moyenne RA de 4 à 30 µm, en particulier de 6 à 12 µm.

9. Procédé selon l'une quelconque des revendications précédentes, **caractérisé en ce que** l'on dépose le matériau antifriction par projection au plasma.

10. Procédé selon l'une quelconque des revendications précédentes, **caractérisé en ce que** l'on dépose comme matériau antifriction un métal, en particulier un alliage métallique.

11. Procédé selon l'une quelconque des revendications précédentes, **caractérisé en ce que** l'on traite en position de superposition concentrique plusieurs têtes de bielle avec leur tête de bielle à revêtir du matériau antifriction.

12. Procédé selon l'une quelconque des revendications précédentes, **caractérisé en ce que** le matériau antifriction est fabriqué avec une épaisseur, éventuellement après un réusinage, de 150 à 800 µm, en particulier de 200 à 500 µm.

13. Procédé selon l'une quelconque des revendications précédentes, **caractérisé en ce que** la tête de bielle est ouverte par entaillage et rupture.
